# EUROPÄISCHE PATENTSCHRIFT

(11) **EP 2 051 582 B1**
(45) Veröffentlichungstag und Bekanntmachung des Hinweises auf die Patenterteilung: **25.02.2015**
(21) Anmeldenummer: 07785081.6
(22) Anmeldetag: 08.08.2007
(51) Int. Cl.: A01M 3/04

(54) **VORRICHTUNG ZUM BEKÄMPFEN ODER EINFANGEN NACHTAKTIVER INSEKTEN**
APPARATUS FOR FIGHTING OR TRAPPING NOCTURNAL INSECTS
DISPOSITIF DE LUTTE OU DE CAPTURE D'INSECTES NOCTURNES

(30) Priorität: 08.08.2006 CH 12682006; 05.11.2006 CH 17472006; 20.04.2007 CH 6592007
(43) Veröffentlichungstag der Anmeldung: 29.04.2009
(73) Patentinhaber: Götschi, Rudolf, 4225 Brislach (CH)
(72) Erfinder: Götschi, Rudolf, 4225 Brislach (CH)
(74) Vertreter: Braun, André jr.
(86) Internationale Anmeldenummer: PCT/CH2007/000386
(87) Internationale Veröffentlichungsnummer: WO 2008/017185

(56) Entgegenhaltungen:
- EP-A2- 1 486 721
- CH-A- 260 495
- DE-U1-202005 015 364
- JP-A- 8 047 361
- US-A- 5 029 411
- US-A- 6 044 584
- US-A1- 2002 191 392

## Beschreibung

Die Erfindung betrifft eine Vorrichtung zum Unschädlichmachen oder Einfangen einzelner nachtaktiver, auf einer Unterlage sitzender Insekten gemäss dem Oberbegriff des Anspruchs 1.

Dass nachtaktive Insekten auf Lichtquellen zufliegen, gehört zu den allgemeinen Erfahrungen. Phototrope Grundstimmung vorausgesetzt, fliegen sie jegliche Lichtquelle an, elektrisches Licht, Kerzen, offenes Feuer. Jede sichtbare Lichtquelle bedeutet für diese Insekten freier Flugraum.

Für die Eireifung benötigen die Stechmückenweibchen Blut von Vögeln, Säugetieren oder auch von Menschen. Sie benutzen visuelle, thermische und geruchliche Faktoren, um geeignete Opfer für eine Blutmahlzeit zu finden.

Wie im Freien auf Blättern, sitzen die Stechmückenweibchen in Wohnräumen, vorzugsweise bei ausgeschaltetem Licht, ruhig an Wänden Decken und Einrichtungen. Bleiben sie im dunklen Raum eine Weile ungestört, so nähern sie sich ihrem Opfer, um Blut zu saugen. Werden sie dabei gestört, so lassen sie sich im dunklen Raume, schnell und meistens in der Nähe des Opfers nieder, wo sie wiederum ruhig sitzen bleiben und wieder abwarten.

Es gibt zahlreiche Methoden, um zu verhindern, dass Stechmücken in Wohnräume eindringen. Vielfach werden Insektengifte eingesetzt, die jedoch umstritten sind. Sind sie jedoch einmal drin, so ist es wichtig, sie rasch unschädlich zu machen. Es werden Fliegenklatschen oder Textilien verwendet, mit denen nach ihnen geschlagen oder geworfen wird. Dieses Vorgehen ist mühsam und erfordert viel Geschick und vor allem Treffsicherheit. Zudem entstehen durch das Zerquetschen der Stechmücken Rückstände und sogar Blutflecken an Wänden, Decken und Einrichtungen. Die vielen Nachteile einer solchen Jagd sind allgemein bekannt.

Aus DE-U-20 2005 015 364 ist ein Insektensauger zum schonenden Einfangen von Insekten bekannt. Das Gerät besitzt eine eingebaute Beleuchtung, um das Einschalten des Lichts zu vermeiden, und ein speziell geformtes Saugrohr, durch das die Insekten beim Einsaugen in einen Fangbehälter unversehrt bleiben. Das Gerät benötigt einen Saugmotor und ist somit insgesamt ziemlich aufwendig.

Der Erfindung liegt die allgemeine Aufgabe zugrunde, die oben aufgeführten Nachteile zu vermeiden und Verbesserungen zu schaffen. Speziell zielt die Erfindung darauf ab, eine einfache, kostengünstige und umweltfreundliche Vorrichtung zu schaffen, mit welchem in Wohnräume eingedrungene Stechmücken gezielt unschädlich gemacht und andere nachtaktive Insekten gezielt eingefangen werden können

Erfindungsgemäss wird die Aufgabe gelöst durch das kennzeichnende Merkmal des Anspruchs 1.

Vorzugsweise besteht der Aufsatz und auch die Mittel zum Festsetzen des Insekts aus glasklarem Material. Ausserdem ist der Aufsatz vorzugsweise mittels eines elastischen Elements mit der Leuchte verbunden. Im Rahmen dieser Beschreibung werden die Begriffe Leuchte und Taschenlampe oder Stablampe gleichwertig verwendet.

Im Folgenden werden unter Bezugnahme auf die beiliegenden Zeichnungen bevorzugte Ausführungsformen der Erfindung beschrieben. Es zeigen:
- Fig. 1: eine Stabtaschenlampe mit einem Aufsatz zum Festsetzen von Stechmücken in auseinandergezogener Darstellung, teilweise im Schnitt
- Fig. 2: eine perspektivische Darstellung der in Fig. 1 gezeigten Anordnung
- Fig. 3: eine perspektivische Darstellung einer anderen Ausführungsform der Erfindung
- Fig. 4: eine Variante der in Fig. 3 gezeigten Verlängerungsvorrichtung
- Fig. 5: eine Ausführungsform zum Einfangen eines Insekts

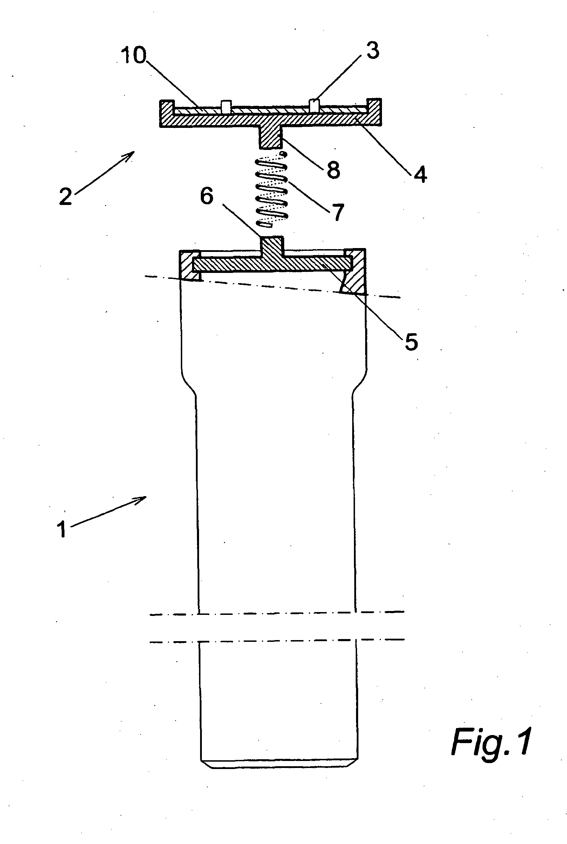

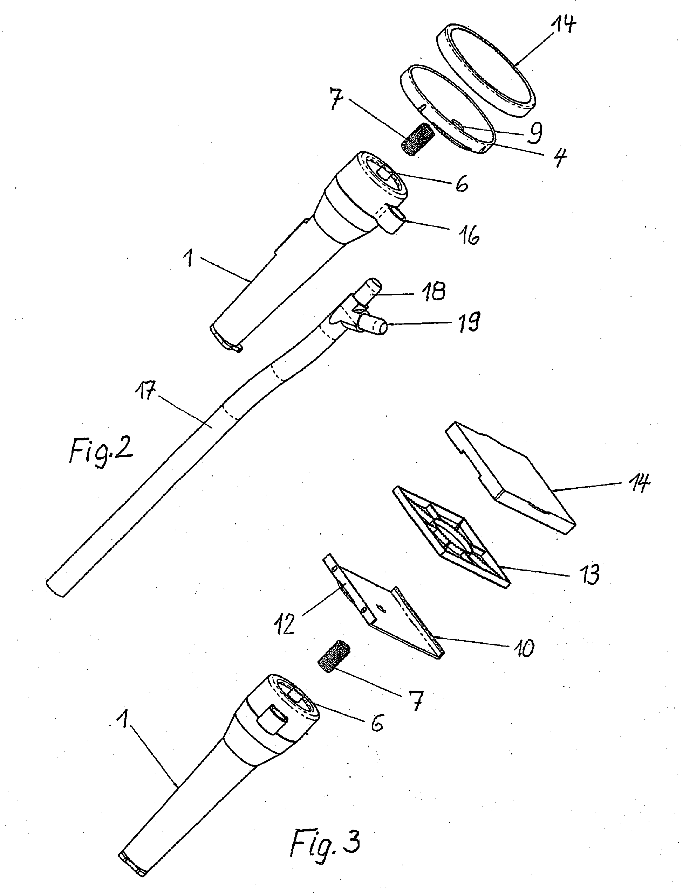

Die in den Fig. 1 und 2 dargestellte Vorrichtung aus Metall oder Kunststoff besteht aus einer für diesen Zweck konzipierten Stabtaschenlampe 1 und einem relativ zu ihr beweglichen Aufsatz 2 in Form einer flachen, mit Abstandhaltern 3 versehenen Platte 4, die mittels eines elastischen Elements mit der Lampe 1 verbunden ist.

Bei der Taschenlampe 1 dieser Ausführungsform besitzt das im Schnitt gezeigte Lampenglas 5 einen zentralen, axial nach aussen gerichteten, zylindrischen Zapfen 6. Dieser ist einstückig am Glas angeformt und besteht somit aus demselben Material, so dass der Lichtaustritt nicht oder unwesentlich beeinträchtigt ist.

Der Zapfen dient zur Befestigung einer Spiralfeder 7, deren eines Ende auf den Zapfen aufgesteckt ist. Die zylindrische Fläche des Zapfens kann aufgerauht oder gerillt sein, um das Ende der Feder fester zu halten und deren unbeabsichtigtes Abziehen zu vermeiden. Aber auch wenn die Oberfläche des Zapfens glatt ist, wird die Feder ausreichend fest gehalten.

Das andere Ende der Feder ist auf einen im wesentlichen gleich geformten Zapfen 8 aufgesteckt, welcher an der Unterseite der Platte 4 angeformt ist. Durch die elastische Verbindung zwischen dem Lampenglas und der Platte 4 kann letztere in alle Richtungen relativ zur Lampenachse kippen. Auf diese Weise kann die Platte immer flach auf einer Unterlage, wie beispielsweise einer Wand etc., aufliegen, auch wenn die Lampe nicht exakt senkrecht zu dieser Unterlage gehalten wird.

Die Platte 4 ist kreisrund und besteht aus einem glasklaren Material, um den grösstmöglichen Lichtdurchgang zuzulassen. Der Durchmesser der Platte 4 kann etwa gleich gross sein wie derjenige des Lampenkopfes, vorzugsweise aber grösser.

Bei der in Fig. 3 gezeigten Ausführungsform besteht der Aufsatz aus einer viereckigen, vorzugsweise quadratischen und mit Abstandhaltern 12 versehenen Platte 10, die in gleicher Weise wie bei der vorstehend beschriebenen Ausführungsform mittels einer Feder 7 mit dem Zapfen 6 verbunden ist.

Mit dem beschriebenen Aufsatz gibt es mehrere Möglichkeiten ein Insekt unschädlich zu machen. Eine erste Möglichkeit besteht darin, die Platte 4 bzw. 10 auf der der Lampe abgewandten Seite mit einer Schicht aus transparentem bzw. glasklarem Fliegenleim zum Festsetzen der Stechmücken zu versehen. Die Abstandhalter 3 bzw. 12 am Rand der Platte 4 bzw. 10 dienen dazu, dass die Mücke nicht zerdrückt wird. Die Abstandhalter sind so bemessen, dass eine Mücke beim Aufsetzen der Platte knapp von der Leimschicht berührt wird. Dies genügt, um sie flugunfähig zu machen. Um ausserdem zu verhindern, dass die Leimschicht mit der Unterlage, auf der die Stechmücke sitzt, in Berührung kommt, ist nicht nur der Rand der Platten 4 bzw. 10 sondern die ganze Fläche mit Abstandhaltern versehen. Dies ist beispielsweise in Fig. 3 gezeigt. Nach dem Aufbringen der Leimschicht wird zwischen die Abstandhalter 12 entlang zwei einander gegenüberliegenden Plattenrändern ein Gitterelement 13 eingesetzt.

Bei beiden Ausführungsformen ist ausserdem ein Deckel 14 vorgesehen, der einerseits die Leimschicht schützt und zum anderen den unangenehmen Anblick der bereits festgesetzten Mücken verbirgt.

Eine weitere Möglichkeit zum Festsetzen von Mücken besteht darin, anstelle einer Leimbeschichtung eine glasklare doppelseitige Klebefolie vorzusehen, wobei die eine Klebeseite zum Aufkleben der Folie auf die Platte und die andere zum Festsetzen der Mücken dient. Die Platte ist perforiert, um Luftblasen zwischen der Folie und der Platte zu vermeiden. Bei dieser Ausführungsform sind die Abstandhalter flacher, damit beim Aufsetzen der Platte ein leichter Druck auf das Insekt ausgeübt wird, um dessen Ankleben sicherzustellen. Ein Vorteil dieser Version ist, dass die Klebefolie abgezogen und durch eine neue ersetzt werden kann, wenn sie durch mehrere festgesetzte Insekten unansehnlich geworden ist. Um das Abziehen der Folie zu erleichtern, ist am Rand der Platte ein grösseres durchgehendes Loch 9 vorgesehen, durch welches eine Seite der Folie mit einem geeigneten Gegenstand, beispielsweise einem Kugelschreiber etc., von der Platte weggedrückt werden kann.

Wenn es nur darum geht, die Mücken zu zerdrücken, kann auf die klebenden Schichten verzichtet werden. Auch bei dieser Ausführungsform sind Abstandhalter vorgesehen, damit das Insekt nicht an die Wand gequetscht wird. Die Abstandhalter sind aber noch flacher als bei der Version mit Klebefolie.

Anstatt den Zapfen 6 am Leuchtenglas anzuformen kann er auch an einem Aufsatz 15 angebracht sein.

Die Zapfen können auch einen quadratischen Querschnitt besitzen, so dass die Innenseiten der Feder nur an den Kanten der Zapfen anliegen. Die Kanten können an ihren Enden, bei denen sie in die jeweilige Platte übergehen, einen Rücksprung aufweisen. Wenn die beiden endseitigen Windungen der Feder mit einem geringfügig kleineren Durchmesser ausgebildet sind, als die anderen Windungen, werden beim Aufschieben der Feder auf die Zapfen diese endseitigen Windungen aufgeweitet und rasten dann in den Rücksprung der Kanten ein.

Gemäss einer weiteren Ausführungsform können in den einander zugewandten Flächen des Aufsetzteils und der Platte auch Vertiefungen angebracht sein, in denen die Enden der zur elastischen Verbindung dienenden Feder befestigt sind.

Anstelle einer Spiralfeder können auch andere elastische Elemente verwendet werden, wie beispielsweise ein Federstahldraht, der in geeigneten Bohrungen der beiden elastisch verbundenen Teile steckt, oder ein rückstellfähiger Kunststoffhals. Bei Lampen mit kleinem Kopfdurchmesser, wie z. B. LED-Lampen, kann eine Spiralfeder so gestaltet sein, dass ihr eines Ende über den Lampenkopf gestülpt werden kann.

Beide Ausführungsformen gemäss den Fig. 1-3 sind mit einem Aufnahmeteil 16 für eine Verlängerung versehen, mittels der Stechmücken auch an hoch liegenden oder sonst schwer zugänglichen Stellen eines Raums festgesetzt werden können. In den Aufnahmeteil 16 kann ein Verlängerungsstab 17 eingesteckt werden. Der Aufnahmeteil besteht aus einem an der Aussenseite des Lampengehäuses oder des Aufsteckteils achsparallel angebrachten Rohrstück. In dieses Rohrstück wird der Verlängerungsstab eingesteckt. Der Verlängerungsstab besitzt zwei zum Einstecken geeignete Zapfen und zwar einen achsparallelen Zapfen 18 und einen dazu im Winkel von beispielsweise 45° stehenden Zapfen 19. Anstelle eines Rohrstücks kann am Gehäuse auch ein Zapfen vorgesehen sein, auf den rohrförmige Enden des Verlängerungsstabs aufgesteckt werden.

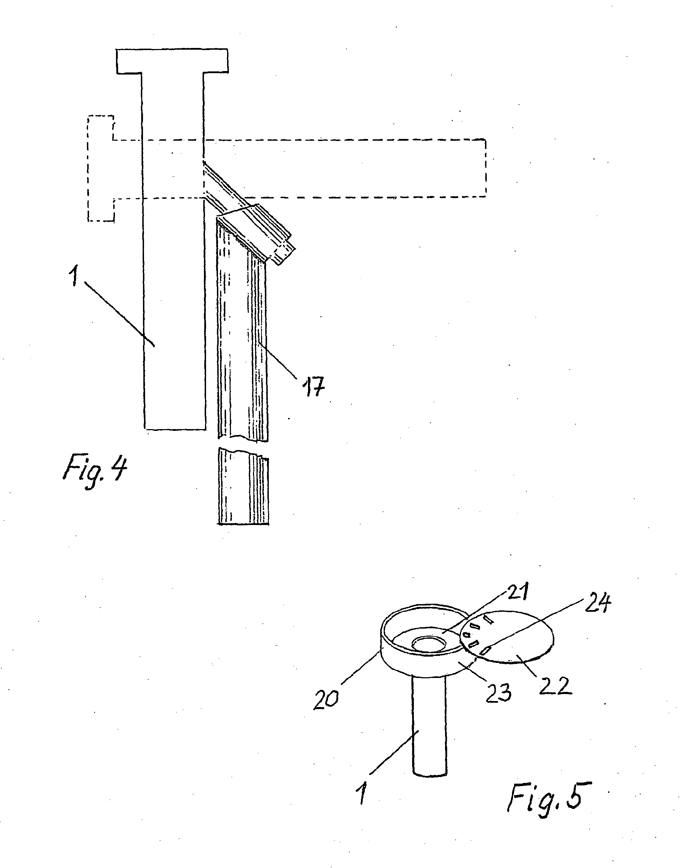

Anstatt der achsparallelen Richtung kann, wie in Fig. 4 gezeigt, der Aufnahmeteil auch in einem Winkel zur Achse angeordnet werden, vorzugsweise unter 45°. Der Aufnahmeteil ist am Lampengehäuse selbst angebracht. Alternativ ist es möglich, den Aufnahmeteil an einem das Lampengehäuse umgebenden und dieses festklemmenden Ring anzubringen. Wenn das in den Aufnahmeteil eingesteckte Ende des Verlängerungsstabs ebenfalls einen Winkel von z.B. 45° mit der Stabachse bildet, kann die Leuchte jeden beliebigen Winkel zum Verlängerungsstab einnehmen.

Der Verlängerungsstab 17 ist eine einstückige Stange oder ein Rohr aus Metall, Kunststoff oder dergl. Alternativ kann der Verlängerungsstab auch aus zusammensteckbaren Einzelteilen oder einer teleskopartig zusammenschiebbaren Stange bestehen.

Eine weitere Möglichkeit zum Festsetzen von Insekten besteht darin, einen Block mit mehreren Blättern aus glasklaren Folien aufgeklebt ist, deren jede einzelne mit einer Beschichtung aus einem nicht aushärtenden Kleber versehen ist, ähnlich dem, wie er beispielsweise für die unter dem Markennamen "Post-it" bekannten Markierungsblöcke verwendet wird. Im Unterschied zu den Markierungsblöcken sind die einzelnen Blätter des Blocks auf ihrer Oberseite und zwar auf dem grössten Teil ihrer Fläche mit Kleber versehen und nur in einem kleinen Randbereich ohne Kleber. Dieser Randbereich dient dem Ergreifen des einzelnen Blatts.

Die Anzahl der Blätter eines Blocks ist so gewählt, dass der Lichtdurchtritt durch die Grundplatte und den Block noch ausreichend ist, um das angezielte Insekt im Lichtstrahl zu fixieren. Zum Fangen des Insekts wird wie bei den anderen Ausführungsformen die mit der erfindungsgemässen Vorrichtung versehen Lampe an das Insekt angenähert, bis es von der Klebeschicht berührt wird und dort kleben bleibt. Nachdem ein Insekt oder deren mehrere auf dem obersten Blatt des Blocks kleben, kann das Blatt einfach abgezogen und entsorgt werden. Damit wird ein neues Blatt für den nächsten Einsatz bereitgestellt.

Wenn alle Blätter des Blocks aufgebraucht sind, kann die Vorrichtung auch mit dem Leim, welcher dem Aufkleben des Blocks dient, noch benutzt werden. Stattdessen kann auch das letzte Blatt des Blocks eine Doppelklebefolie sein, welche den Block fixiert.

Eine weitere Möglichkeit, Stechmücken und andere lästige Insekten unschädlich zu machen besteht darin, die Platte 4 bzw. 10 mit Mitteln zum Anlegen einer elektrischen Spannung zu versehen. Zu diesem Zweck werden über die Platte verteilt Drähte oder Leiterbahnen angeordnet.

Die in Fig. 5 schematisch gezeigte Vorrichtung dient dem Einfangen von Insekten, ohne sie zu beschädigen. Ein Gehäuse 20 mit einer Öffnung oder einem transparenten Bereich im Boden 21 ist auf einer Leuchte aufgesetzt oder mit ihr verbunden, beispielsweise auch ähnlich wie die Platten 4 bzw. 10. Am Gehäuse 20 ist auf der Seite, die dem Boden 21 gegenüber steht ein schwenkbarer Deckel 22 ohne Rand, aus flachem transparentem Material, angebracht. Die Schwenkachse des Deckels befindet sich in der Seitenwand 23 oder nahe derselben innen- oder aussenseitig, und ist von einer starkwandigen rohrähnlichen Führung umschossen, auf welcher der Deckel aufliegt. Auf diese Weise ist der Deckel so positioniert, dass bei um 180° ausgeschwenktem Deckel 22 das Gehäuse optimal offen steht. Der Deckel ist auf seiner äusseren kreisförmigen Oberfläche teilweise mit einer gummiartigen Beschichtung oder mit kleinen gummiartigen Erhöhungen 24 versehen. Das offene und auf eine Unterlage aufgesetzte Gehäuse wird geschlossen, indem es zum Deckel 22 hin geschwenkt wird. Der Deckel bleibt dabei infolge der gummiartigen oder weichen Beschichtung 24 und des Pressdrucks gegen die Unterlage, an der Unterlage haften. Somit kann das Gerät einhändig bedient werden, auch bei Verwendung einer Verlängerung. Die Vorrichtung kann auch bei Tageslicht ohne Lichtdurchfluss verwendet werden.

## Patentansprüche

1. Vorrichtung zum Unschädlichmachen oder Einfangen einzelner nachtaktiver, auf einer Unterlage sitzender Insekten, mit einer tragbaren Leuchte (1) und einen am Lichtaustritt derselben angeordneten, den Lichtdurchgang zulassenden Aufsatz (2) mit einem Mittel zum Festsetzen des Insekts, **dadurch gekennzeichnet, dass** der Aufsatz mittels eines elastischen Elements (7) beweglich mit der Leuchte verbunden ist derart, dass der Aufsatz in alle Richtungen relativ zur Leuchte kippen kann, und dass das Mittel zum Festsetzen des Insekts eine quer zum austretenden Licht angeordnete Platte (4, 10) aus glasklarem Material ist, die auf ihrer dem Lichteinfall abgewandten Seite mit Abstandshaltern (3,12) versehen ist.

2. Vorrichtung nach Anspruch 1, **dadurch gekennzeichnet, dass** die Platte (3,10) Schicht aus transparentem bzw. glasklarem Fliegenleim auf ihrer dem Lichteinfall abgewandten Seite mit einer versehen ist.

3. Vorrichtung nach Anspruch 1, **dadurch gekennzeichnet, dass** das Mittel zum Festsetzen des Insekts ein in den Aufsatz (2) einsetzbares, auswechselbares Teil ist.

4. Vorrichtung nach Anspruch 1, **dadurch gekennzeichnet, dass** das Mittel zum Festsetzen des Insekts direkt an der Leuchte (1) angebracht ist.

5. Vorrichtung nach Anspruch 1, **dadurch gekennzeichnet, dass** das Mittel zum Festsetzen des Insekts aus einem Block aus mit Leim beschichteten Blättern besteht.

6. Vorrichtung nach Anspruch 1, **dadurch gekennzeichnet, dass** das elastische Element (7) eine Spiralfeder ist, die mit einem Ende auf einen an der Leuchte (1) angebrachten Zapfen (6) und mit ihrem zweiten Ende auf einen am Aufsatz (2) angebrachten Zapfen (8) aufgesteckt ist.

7. Vorrichtung nach Anspruch 1, **dadurch gekennzeichnet, dass** eine mit der Leuchte (1) oder mit dem Aufsatz (2) verbindbare Verlängerung (17) vorgesehen ist.

## Claims

1. A device for rendering harmless or trapping individual nocturnal insects sitting on a substrate, comprising a portable luminaire (1) and an attachment (2), which is disposed at the light outlet of the luminaire, allows light to pass and has means for catching the insect, **characterized in that** the attachment is movably connected to the luminaire by way of an elastic element (7) in such a way that the attachment is able to tilt in all directions relative to the luminaire, and the means for catching the insect is a plate (4, 10), which is disposed transversely to the exiting light, made of clear material and provided with spacers (3, 12) on the side thereof facing away from the incident light.

2. The device according to claim 1, **characterized in that** the plate (3, 10) made of clear material is provided with a layer of transparent or clear fly glue on the side thereof facing away from the incident light.

3. The device according to claim 1, **characterized in that** the means for catching the insect is a replaceable part that can be inserted into the attachment (2).

4. The device according to claim 1, **characterized in that** the means for catching the insect is provided directly on the luminaire (1).

5. The device according to claim 1, **characterized in that** the means for catching the insect is made of a block composed of sheets coated with glue.

6. The device according to claim 1, **characterized in that** the elastic element (7) is a spiral spring, the one end of which is placed on a pin (6) provided on the luminaire (1) and the second end of which is provided on a pin (8) provided on the attachment (2).

7. The device according to claim 1, **characterized in that** an extension (17) is provided, which can be connected to the luminaire (1) or to the attachment (2).

## Revendications

1. Dispositif pour la neutralisation de la nocivité ou la capture d'insectes nocturnes individuels situés sur un support, avec une lampe portable (1) et un chapeau (2) agencé dans la sortie de lumière de celle-ci et laissant passer la lumière, avec un moyen pour l'immobilisation de l'insecte, **caractérisé en ce que** le chapeau est relié de façon mobile avec la lampe au moyen d'un élément élastique (7), de telle manière que le chapeau peut basculer dans toutes les directions par rapport à la lampe, et **en ce que** le moyen pour l'immobilisation de l'insecte est une plaque (4, 10) constituée d'un matériau cristallin, agencée transversalement à la lumière sortante, laquelle est pourvue de moyens d'espacement (3, 12) de son côté détourné de la lumière incidente.

2. Dispositif selon la revendication 1, **caractérisé en ce que** la plaque (3, 10) constituée d'un matériau cristallin est pourvue d'une couche de colle à mouches transparente ou cristalline de son côté détourné de la lumière incidente.

3. Dispositif selon la revendication 1, **caractérisé en ce que** le moyen pour l'immobilisation de l'insecte est une pièce remplaçable destinée à être insérée dans le chapeau (2).

4. Dispositif selon la revendication 1, **caractérisé en ce que** le moyen pour l'immobilisation de l'insecte est fixée directement sur la lampe (1).

5. Dispositif selon la revendication 1, **caractérisé en ce que** le moyen pour l'immobilisation de l'insecte est constitué d'un bloc de feuilles enduites de colle.

6. Dispositif selon la revendication 1, **caractérisé en ce que** l'élément élastique (7) est un ressort hélicoïdal, dont une extrémité est montée sur un téton (6) fixé à la lampe (1) et dont la deuxième extrémité est montée sur un téton (8) fixé au chapeau (2).

7. Dispositif selon la revendication 1, **caractérisé en ce qu'**il est prévu un prolongement (17) apte à être relié à la lampe (1) ou au chapeau (2).
